# EUROPEAN PATENT SPECIFICATION

(11) **EP 2 280 229 B1**
(45) Date of publication and mention of the grant of the patent: **15.03.2017**
(21) Application number: 10169844.7
(22) Date of filing: 16.07.2010
(51) Int. Cl.: F24D 19/06, F24D 19/00

(54) **Space Heater**
Raumheizgerät
Chaufferette

(30) Priority: 28.07.2009 GB 0913053
(43) Date of publication of application: 02.02.2011
(73) Proprietor: Basic Holdings, Dublin (IE)
(72) Inventor: Betz, Martin, Louth, Louth (IE); Kiernan, Patrick, Louth, Dunleer (IE)
(74) Representative: Moore, Barry

(56) References cited:
- EP-A2- 1 126 228
- DE-U1-202008 005 825
- FR-A1- 2 445 933
- GB-A- 1 060 411

## Description

### Field of the Invention

The present invention relates to space heaters and in particular to space heaters that utilise a water based heat exchanger to provide heated air within a room.

### Background

Electrical space heaters are well known. They vary in type and construct and can broadly be construed as being of the generally portable type such as fan heaters or those that are permanently installed at a fixed location within a room. Examples of this latter type include storage heaters which operate by heating a heating element during a first period of the day and then allowing that heat to dissipate through the room at another period during the day. This is particularly advantageous in situations where the price of electricity varies depending on the time of usage as the heating can be effected during off-peak times.

Another example of a permanently fixed electrical space heater is one that interfaces with a domestic water supply. In this latter example, the heater is provided at a fixed location on the wall. The heater comprises a heat exchanger in the form of a water coil that is in fluid communication with a domestic water hot water supply that provides for a flow of hot water through the water coil. An impeller or fan located below the heat exchanger provides for the generation of an air current passed the coil which results in a heated air flow exiting from the heater to achieve the necessary heating. To provide the necessary flow of water through the coil, such heaters employ a flow and return pipe which needs to be coupled to corresponding flow and return pipe within the domestic plumbing arrangement. Traditionally the flow and return pipes that are coupled to the heat coil are provided at the same side of the heat coil.

These space heaters are particularly advantageous when used in combination with a domestic water supply that employs renewable energies such as solar power, heat exchangers or heat pumps as a ready supply of hot water can be generated relatively cleanly and cheaply for supply to the space heater. In combination with the active air current generator they provide a highly efficient form of space heating. As a result of the popularity of such new energy sources more and more people are turning to installing these space heaters.

To install such a space heater it is necessary to mount the heater to the desired position on a wall where it is to be located. It is necessary to couple the heater to an electrical supply to allow for the provision of power to the heater for operation of for example the impeller and/or controls of the heater. It is further necessary to couple the heat coil to the domestic water supply. In a new build this is not a difficulty as the location of the pipework to which the heater is to be coupled can be specified. However, it is also common to replace existing heaters such as traditional radiators with these space heaters, in which case the domestic pipework is not always in the most appropriate place for coupling to the heater.

It will be recalled that traditional space heaters provide the flow and return connections to one side of the heat coil. A typical problem that is encountered is where pipework that is to be coupled to these connections is located to the other side of the coil. In a first type of traditional space heater this has required the installer to dismantle the space heater, take the heat coil out of its housing, and reverse its direction such that the connections are now on the opposite side to that previously provided. This is both awkward and time consuming.

Another problem that is encountered is where the domestic flow and return connections are spaced apart from one another- at a distance typically equivalent to the length of the previously installed radiator. This is very common in both the UK and Ireland where traditionally water based radiators have employed flow and return valves at opposite ends of the radiator. When this is encountered by the installer of a space heater there has heretofore been a requirement that the installer must extend the pipework from its fixing along the wall and outside of the space heater to a location where it can be coupled to the connection to the space heater. This can result in the final installed heater presenting unsightly pipework which can be damaged though accidental encounters with for example furniture or vacuum cleaners or the like. It will be appreciated that in water based systems, the accidental damage of pipework can result in extensive damage to the surroundings resultant from a leaking of the water from the pipework.

There is therefore a need for a space heater that can be readily installed irrespective of the location of the existing pipework.

### Summary

Accordingly the present teaching provides a space heater in accordance with claim 1. Advantageous features are defined in the dependent claims.

A space heater disclosing the features of the preamble of claim 1 is known from document GB 1060411.

These and other problems are provided by a space heater provided in accordance with the present teaching which allows for connection of the water coil within the space heater to existing pipework at one or both ends of the space heater.

Accordingly there is provided a space heater comprising:
a housing;
a water coil heat exchanger comprising a flow and return pipe for respective coupling to flow and return pipes of a domestic heating system; and
wherein the housing comprises inlets at first and second sides of the housing for receipt of pipework for coupling between the flow and return pipes of the heat exchanger and the flow and return pipes of the domestic heating system.

The heater may optionally comprise an impeller located above or below the heat exchanger and configured to direct an air current proximal to the heat exchanger to effect a heating of the air current prior to discharge from the heater. Where the heat exchanger is provided in an upper region of the housing the impeller will desirably be provided below that exchange in a lower region of the housing. Where the heat exchanger is provided in a lower region of the housing the impeller will desirably be provided above that exchange in an upper region of the housing.

The flow and return pipes of the heat exchanger are located to a first side of the heat exchanger between the heat exchanger and a first side wall of the housing. The flow and return pipes are desirably coupled to the domestic supply using plumbing fittings. The housing defines a connection space within an interior volume of the housing sufficient for enabling connection of the flow and return pipes to the necessary plumbing fittings. The connection space is located proximal to the first side wall of the housing. Desirably the flow and return pipes extend downwardly within the housing such that the plumbing fittings are presented and coupled to them in a vertical orientation.

The impeller extends longitudinally across the housing and is rotatable about a rotation axis. The impeller is desirably spaced apart from a bottom wall of the housing so as to define a pipe-passage between the impeller and the bottom wall of the housing.
The pipe-passage is of sufficient size to allow for passage of pipework from one side of the housing in a direction substantially parallel with the rotation axis of the impeller. In this way pipework received within one side of the housing can travel internally within the housing to the other side of the housing.
The impeller is desirably coupled to a motor that is provided to a second side of the housing, different to the first side. By having the connections to the water coil at a first side and the motor to a second side it is possible to reduce the length of the housing in that the space at the two sides can be dedicated to specific items and duplication of space is not required.

A vent is desirably located below the impeller and is preferably defined within the bottom wall of the housing. In operation, air received into the housing through the vent will be accelerated by the impeller passed the heat exchanger and exit through one or more vents provided in an upper region of the housing. The pipe-passage is desirably provided between the vent and the impeller such that air received within the housing passes pipework within the pipe-passage prior to contact with the impeller.

The housing desirably comprises first and second internal side walls provided internally within the housing and extending upwardly in a vertical orientation. The first and second internal side walls desirably provide a mounting surface for both the impeller and the heat exchanger, the impeller and heat exchanger being located between the first and second internal side walls. Pipe apertures are provided in one or both of the first and second internal side walls to allow for passage of pipes into the pipe-passage through the first and/or second side all respectively.

The housing desirably includes one or more internal baffles to preferentially direct air passed the heat exchanger and out of the heater.

The heater desirably comprises an electrical control configurable to allow a user to select one or more of times and/or temperature parameters of the heater. The control is desirably accessible to the user from an exterior portion of the housing. The control may be configured to allow for sole operation of the heater independent of other heating appliances within the environment. In a further embodiment, the control may be configured to interface with one or more remote heating systems which provide a centralised control of the heating.

Exemplary arrangements are described with reference to the following drawings.

DE 202008005825 U1 discloses a modular fan system comprising a plurality of modular units that are configured for coupling to each other.

### Brief Description Of The Drawings

The present invention will now be described with reference to the accompanying drawings in which:
Figure 1 is a schematic front view showing a space heater in accordance with the present teaching with a front cover removed to show internal elements of the heater configured for connection to water supply at a first side of the heater.
Figure 2 shows the heater of Figure 1 configured for connection of a water supply provided to the rear of the heater.
Figure 3 shows the heater of Figure 1 configured for connection to a water supply provided at a second side of the heater.
Figure 4 shows a similar arrangement to that of Figure 3 where the same kit can be used to extend the coupling to the domestic water supply to a different side of the heater to where the flow and return fittings are located.
Figure 5 shows the heater of Figure 1 configured for connection to supplies at both sides of the heater.
Figure 6 shows how the heater of Figure 1 can be arranged to accommodate for an offset between the flow and return pipes of the domestic supply.

### Detailed Description Of The Drawings

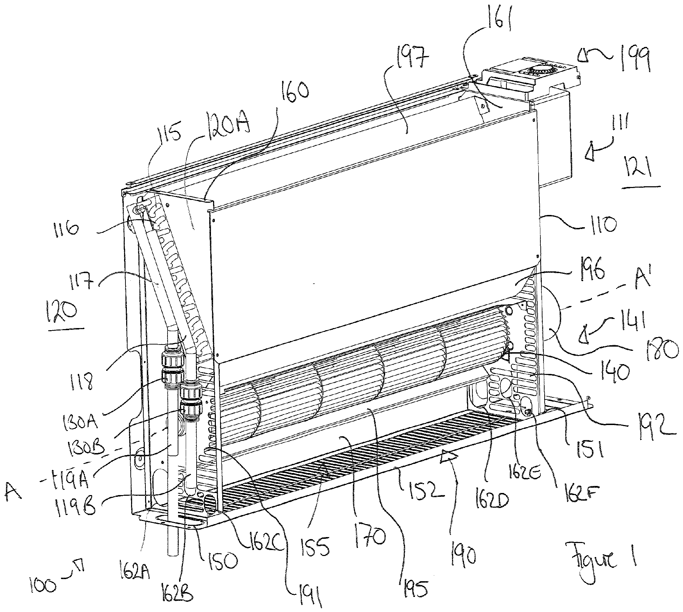

Exemplary arrangements of a space heater provided in accordance with the present teaching will now be described with reference to Figures 1 to 6 of the accompanying drawings. It will be appreciated that these are provided to assist a person skilled in the art with an understanding of the present teaching but are not intended to limit the scope of the invention which defined in the claims which follow.

Figure 1 shows a space heater 100 comprising a housing 110 having a water coil heat exchanger 115 located in an upper region 111 thereof. In this exemplary arrangement the heat exchanger is a water based heat exchanger comprising a plurality of coils 116 that extend across the heater from a first side 120 to a second side 121. The coil arrangement of the heat exchanger 115 comprises a flow 117 and a return 118 pipe for respective coupling to flow and return pipes of a domestic heating system. In the arrangement of Figure 1, the flow and return pipes are individually coupled to pipework 119A, 119B via plumbing fittings 130A, 130B of the sort that will be well familiar to those skilled in the art. These could for example be fabricated from a brass or other metal or indeed could be fabricated from a plastics. The use of such fittings ensures a sealed connection between two sections of pipe.

As is shown in Figure 1, the flow 117 and return 118 pipes of the heat exchanger are located to the first side 120 of the housing. In this arrangement they are provided to a first side 120A of the heat exchanger between the heat exchanger and where ultimately the cover will be located. When the cover (not shown in these schematics) is located onto the heater it will define a connection space within an interior volume of the housing sufficient for enabling the connection of the flow and return pipes to the necessary plumbing fittings. In this way the installer will have enough access room to ensure that they can adequately tighten the fittings to each of the two pipes that are being connected. The connection space is located proximal to the first side 120 of the housing. As shown in Figure 1, desirably the flow and return pipes extend downwardly within the housing such that the plumbing fittings are presented and coupled to them in a vertical orientation.

An impeller 140 is located below the heat exchanger in a lower region 141 of the housing, the impeller being configured to direct an air current proximal to the heat exchanger to effect a heating of the air current prior to discharge from the heater. In this arrangement the air will travel upwardly passed the impeller 140 into proximal contact with the heat exchanger, undergo a heating and then pass out through one or more vents in the upper region 111 of the heater.

To facilitate the connection of the water coil within the space heater to existing pipework at one or both ends of the heater 100, the housing 110 comprises inlets 150, 151 at the first 120 and second 121 sides of the housing for receipt of pipework for coupling between the flow and return pipes of the heat exchanger and the flow and return pipes of the domestic heating system.

The impeller 140 in this exemplary arrangement extends longitudinally across the housing and is rotatable about a rotation axis A-A'. The impeller is desirably spaced apart from a bottom wall 152 of the housing so as to define a pipe-passage 155 between the impeller 140 and the bottom wall 151 of the housing. The pipe-passage is of sufficient size to allow for passage of pipework from one side of the housing in a direction substantially parallel with the rotation axis A-A' of the impeller 140. In this way pipework received within one side of the housing can travel internally within the housing to the other side of the housing.

The housing desirably comprises first 160 and second 161 internal side walls provided internally within the housing and extending upwardly in a vertical orientation. The height of the individual internal side walls desirably corresponds substantially with the overall height of the heater. The first and second internal side walls desirably provide a mounting surface for both the impeller and the heat exchanger, the impeller and heat exchanger being located between the first and second internal side walls. Pipe apertures 162 are desirably provided in one or both of the first and second internal side walls to allow for passage of pipes into the pipe-passage through the first and/or second side all respectively. In this arrangement three sets of pipe apertures (162A, 162D), (162B, 162E), (162C, 162F) are provided to allow the installer a choice of where to route the individual pipes through the pipe-passage. In this exemplary arrangement the first set (162A, 162D) provide for a routing along a rear surface 170 of the heater; the second set (162B, 162E) would provide for a routing mid pipework passage and the third set (162C, 162F) would provide for a routing towards the front of the heater. It will be appreciated that individual pipe apertures could be mixed out of the sets indicated herein, for example the pipe could enter the pipework passage through a first aperture 162A and exit through a second 162F, the first and second not being coaxial along a direction parallel with the direction of rotation A-A' of the impeller.

Where the pipework used is of a rigid variety - for example fabricated from copper- it will be appreciated that typically the sets of apertures will be used as above. Where the pipework is flexible, it is easier for the installer to route through individual apertures and mix up the sets.

By providing a choice of routing the pipework it is easier to effect a passage of the pipes through the heater in a manner that will allow for ultimate alignment of the coupling pipes with the flow and return 117, 118 of the heat exchanger and the flow and returns of the domestic hot water system with which they are to be coupled.

The impeller 140 is desirably coupled to a motor 180 that is provided to a second side 121 of the housing, different to the first side 120. Desirably the motor 180 is mounted to the second side internal side wall 161, at an opposite side to the impeller 140. It will be appreciated from an inspection of Figure 1 that the connections to the water coil are provided at a first side of the heater and the motor is provided to the second side that it is possible to reduce the length of the housing in that the space at the two sides can be dedicated to specific items and duplication of space is not required. In prior art arrangements where there was a possibility that the heat exchanger would have to be lifted and rotated through 180 degrees to facilitate coupling to a supply feed provided at the opposite end of the heater to where the flow and return pipes of the heat exchanger were provided that such duplication of space was required as both ends needed to be dimensioned to receive either a motor or a coupling arrangement.

To facilitate the passage of air through the heater a vent 190 is desirably located below the impeller and is preferably defined within the bottom wall 152 of the housing. In operation, air received into the housing through the vent will be accelerated by the impeller passed the heat exchanger and exit through one or more vents or outlets (not shown) provided in an upper region of the housing. The pipe-passage 155 is desirably provided between the vent 190 and the impeller 140 such that air received within the housing passes pipework within the pipe-passage prior to contact with the impeller. Vents 191, 192 may also be provided in the internal side walls 160, 161 of the heater to allow for passage of additional air to circulate within the heater.

The housing desirably includes one or more internal baffles 195, 196, 197 to preferentially direct air passed the heat exchanger and out of the heater.

The heater desirably comprises an electrical control 199 configurable to allow a user to select one or more of times and/or temperature parameters of the heater. The control 199 is desirably accessible to the user from an exterior portion of the housing. The control may be configured to allow for sole operation of the heater independent of other heating appliances within the environment. In a further embodiment, the control may be configured to interface with one or more remote heating systems which provide a centralised control of the heating.

It will be appreciated that an exemplary arrangement of a space heater which allows for connection of the water coil within the space heater to existing pipework at one or both ends of the space heater has been described. Such a heater advantageously allows for the passage of pipework from one side of the heater to the other side of the heater internally within the housing of the heater. In this way, the pipework is protected within the housing. By allowing for the connection of the flow and return pipes to a domestic supply at either or both ends of the heater it is possible to provide the heater with a permanently mounted heat coil that does not have to be reversed to accommodate different mounting arrangements. This reduces the time and complexity of installation in that the fluid connections of the heat exchanger can be achieved through a simple connection of pipework and not needing the material modification of the internal construct of the heater itself. While the teaching has been described in the context of a water based heat exchanger it will be appreciated that heaters in accordance with the present teaching could be used in any fluid based system that requires connection to a fluid supply be that in the liquid of gaseous form. For example, a system such as that heretofore described could be equally used with a steam based heat exchanger where the pipework provides for the passage of steam into and out of the heat exchanger.

The arrangement of Figure 1 shows an example where the flow and return pipes of the domestic water supply are located beside one another. In this arrangement, the heater may be located relative to those pipes to allow a direct coupling of the flow and return pipes of the heat exchanger to those pipes without requiring transfer of pipes through the pipework passage. In this exemplary arrangement, the pipes will be dropped vertically through the inlet 150 and a coupling may be effected.

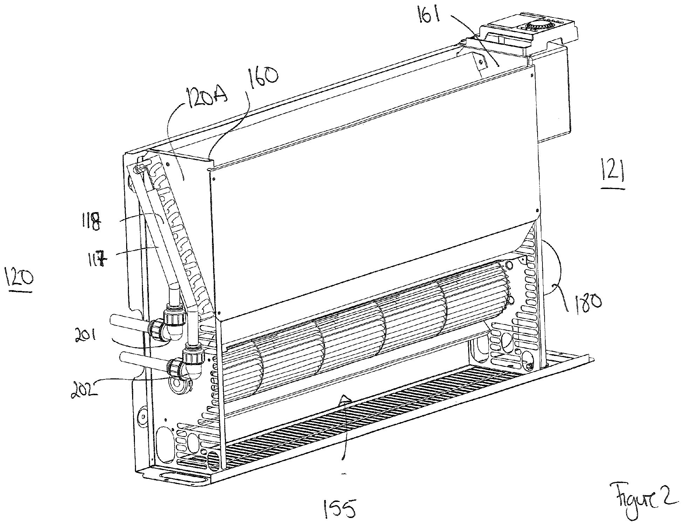

In Figure 2, the same heater is used, but the installer finds that the existing pipework to which he wishes to connect is provided to the rear of the mounted heater. This may arise for example where the domestic pipework extends outwardly from a side wall of building as opposed to projects upwardly from the floor- as would have been the case in the example of Figure 1. In this arrangement, the pipes 117, 118 are coupled through a 90 degree fitting 201, 202 to allow for a routing of the pipework out the back of the heater.

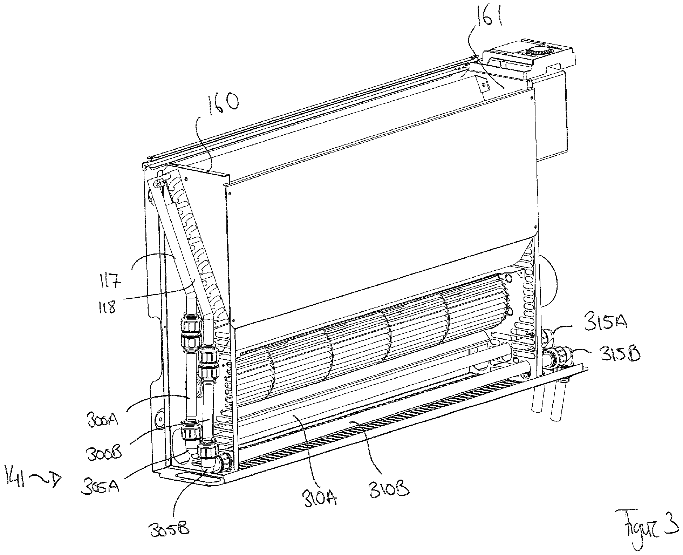

In Figure 3, the same heater is used but the installer finds that when mounted to the desired surface that the internal pipework 117, 118 is located on the opposite side of the heater to where the domestic supply is located. To facilitate the coupling to the water supply, the installer simply uses an extension kit comprising vertical extenders 300, a first set of 90 degree fittings 305, pipework passage pipes 310 and a second set of 90 degree fittings 315. The vertical extenders allow for an extension of the flow and return pipes 117, 118 to a lower region 141 of the heater. The first set of fittings then allow for the direction of flow to be changed from a vertical direction to a horizontal direction, so as to allow for the passage of fluid in a direction parallel with the axis of rotation of the impeller. These pipework passage pipes 310A, 310B extend through the pipework passage and have a length at least that of the pipework passage. In this way the fittings can be located externally of the internal side walls 160, 161. The second set of fittings then allow for the direction of flow to be changed again to a vertical direction to allow for the extension of the flow couplings downwardly and out of the heater.

Using this combination of pipes it is possible for the installer to fit the heater where required and then using plumping techniques to couple the heater pipework with a minimum of effort.

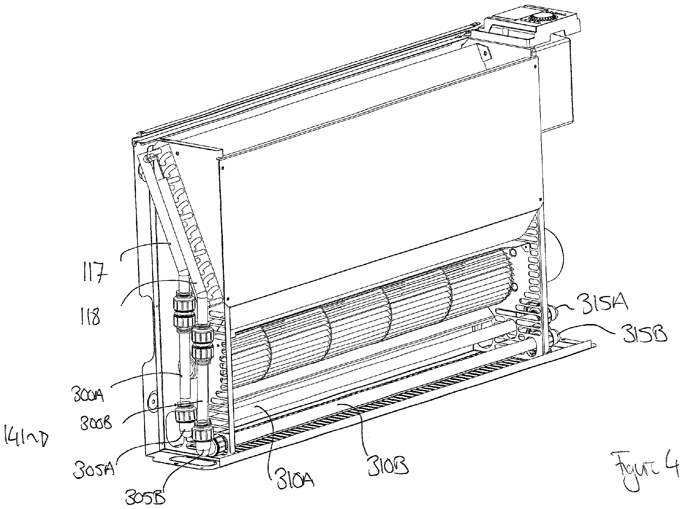

Figure 4 shows a similar arrangement to that of Figure 3 where the same kit can be used to extend the coupling to the domestic water supply to a different side of the heater to where the flow and return 117, 118 fittings are located. The same kit is used to extend across the pipework passage but in this arrangement the second set of fittings 315A, 315B are orientated to direct the pipes rearwardly in a horizontal direction to facilitate coupling to a water supply provided in the same surface to which the heater is mounted.

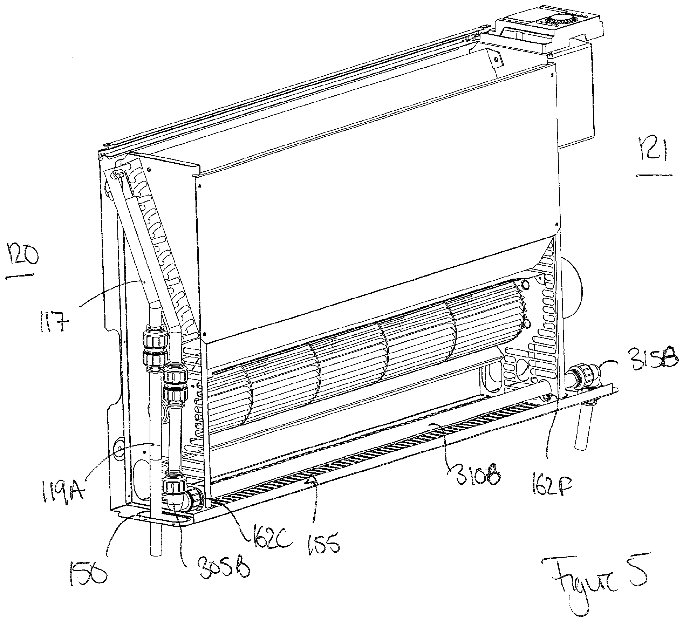

Figure 5 shows an installation arrangement that combines elements of that disclosed in Figures 1 and 3, where the domestic supply is split such that the flow and return pipes are at opposite ends of the heater. In this arrangement the pipework passage is used to facilitate the transportation of a single pipe through heater from the first side 120 to the second side 121. At that side that pipe can be coupled to the domestic feed located at that side. The first pipe 119A can be coupled at the first side 120 by dropping it vertically through the inlet 150. It will be appreciated that in this arrangement the installer has chosen the foremost set of apertures 162C, 162F for transporting the pipework passage pipe 310B through the passage 155.

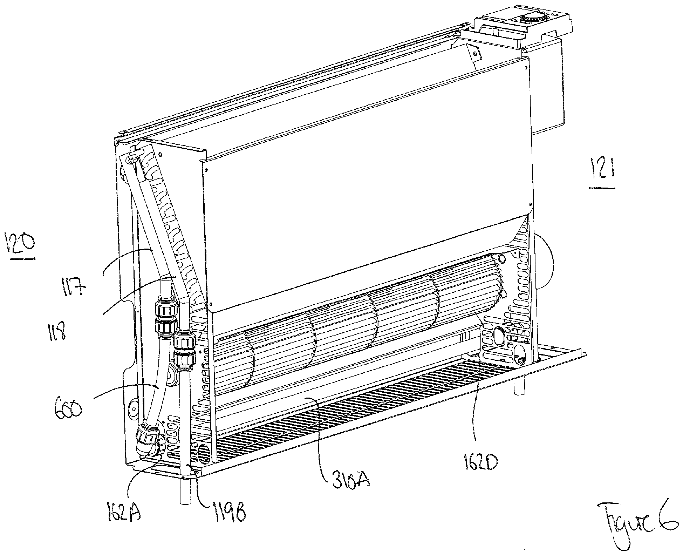

Figure 6 shows a further example where on mounting the heater the flow supply is located to the opposite end of the heater to the flow pipe 117. This is different to the arrangement of Figure 5 where the return was on that opposite end. Using a kit comprising a flexible vertical extender 600 and the pipework passage pipe 310A a fluid can be transported internally within the heater from the second side 121 to the first side 120. The installer has in this instance availed of the first set of apertures 162A, 162D, showing the flexibility that is afforded to the installer by a heater provided in accordance with the present teaching. The return pipe 118 is coupled to a return supply located vertically below and on the same side 120 of the heater as the return pipe 118.

It will be appreciated that while exemplary embodiments have been described with reference to inclusion of an electrically powered impeller within the housing of the heater, that heaters benefiting from the provision of the pipework passage may or may not include such impellers. Where not provided, the heater is effectively a passive device providing space heating based on the passage or air currents passed a heated coil within the housing of the heater. In an active arrangement where an impeller is provided, movement of the air currents is assisted by the action of the impeller thereon. Such latter arrangements may be considered electrical space heaters.

Where the terms upper and lower, top and bottom, vertical and horizontal have been used it will be appreciated that these are relative terms intended to relate to the normal installation orientation of the heater where the heater is mounted to wall and the impeller is provided below the heat exchange to allow the natural convection currents of heated air to be assisted through action of the impeller on the air.

It will be appreciated that modifications can be made without departing from the scope of the invention. Furthermore the dimensions and geometry of the illustrated exemplary arrangement described herein are not to be construed as limiting.

The words comprises/comprising when used in this specification are to specify the presence of stated features, integers, steps or components but does not preclude the presence or addition of one or more other features, integers, steps, components or groups thereof.

## Claims

1. A space heater (100) for use in a domestic heating system, the space heater comprising:
a. a housing (110);
b. a water coil heat exchanger (115) comprising a flow (117) and a return (118) pipe for respective coupling to flow and return pipes of the domestic heating system, and
wherein the housing comprises inlets (150, 151) at first (120) and second (121) sides of the housing for receipt of coupling pipework for coupling between the flow and return pipes of the heat exchanger and the flow and return pipes of the domestic heating system; the housing further comprising a pipe-passage (155) extending from one side of the housing to the other side of the housing to allow the coupling pipework to travel internally within the housing from one side to the other side of the housing;
wherein the flow and return pipes being arranged for being coupled to the domestic heating system using plumbing fittings (130A, 130B), and the housing further defining a connection space within an interior volume of the housing sufficient for enabling connection of the flow and return pipes to the necessary plumbing fittings,
**characterized in that** the flow and return pipes of the heat exchanger are located to a first side of the heat exchanger between the heat exchanger and a first side wall of the housing and the connection space is located proximal to the first side wall of the housing.

2. The heater (100) of claim 1 wherein the water coil heat exchanger (115) is located in an upper region (111) of the housing.

3. The heater (100) of claim 1 or 2 comprising an impeller (140) configured to direct an air current proximal to the heat exchanger (115) to effect a heating of the air current prior to discharge from the heater.

4. The heater (100) of claim 3 comprising an electric motor (180) for powering the impeller.

5. The heater (100) of claim 1 wherein the flow (117) and return (118) pipes extend downwardly within the housing (110) such that the plumbing fittings (130A, 130B) are presented and coupled to them in a vertical orientation.

6. The heater (100) of claim 3 wherein the impeller (140) extends longitudinally across the housing (110) and is rotatable about a rotation axis.

7. The heater (100) of claim 6 wherein the impeller (140) is spaced apart from a bottom wall (152) of the housing (110), the pipe-passage (155) being provided between the impeller and the bottom wall of the housing.

8. The heater (100) of any one of claims 6 to 7, wherein the impeller (140) is coupled to a motor (180) that is provided to a second side (121) of the housing (11), different to the first side (120).

9. The heater (100) of any preceding claim comprising a vent (190) located in a lower region (141) of the housing (110) such that, operably, air received into the housing through the vent will be heated through passing the heat exchanger (115) and exit through one or more vents provided in an upper region (111) of the housing.

10. The heater (100) of claim 9 wherein the pipe-passage (155) is provided between the vent (190) and the impeller (140) such that air received within the housing (110) passes pipework within the pipe-passage prior to contact with the impeller.

## Patentansprüche

1. Raumheizkörper (100) zur Verwendung in einer Wohnungsheizanlage, wobei der Raumheizkörper Folgendes aufweist:
a. ein Gehäuse (110);
b. einen Wasser-Rohrwendel-Wärmeübertrager (115), der ein Vorlauf- (117) und ein Rücklauf- (118) -rohr zur Kopplung mit einem Vorlauf- bzw. Rücklaufrohr der Wohnungsheizanlage aufweist, und
wobei das Gehäuse Einlässe (150, 151) an einer ersten (120) und einer zweiten (121) Seite des Gehäuses zur Aufnahme von Kopplungsrohren zur Kopplung zwischen dem Vorlauf- und dem Rücklaufrohr des Wärmeübertragers und dem Vorlauf- und dem Rücklaufrohr der Wohnungsheizanlage aufweist; wobei das Gehäuse ferner einen Rohrdurchgang (155) aufweist, der sich von einer Seite des Gehäuses zur anderen Seite des Gehäuses erstreckt, so dass die Kopplungsrohre innerlich in dem Gehäuse von einer Seite zur anderen Seite des Gehäuses verlaufen können;
wobei das Vorlauf- und das Rücklaufrohr angeordnet sind, um unter Verwendung von Installationsarmaturen (130A, 130B) mit der Wohnungsheizungsanlage gekoppelt zu werden, und das Gehäuse ferner einen Anschlussraum innerhalb eines Innenvolumens des Gehäuses definiert, der ausreicht, um den Anschluss der Vorlauf- und Rücklaufrohre an die notwendigen Installationsarmaturen zu ermöglichen,
**dadurch gekennzeichnet, dass** das Vorlauf- und das Rücklaufrohr des Wärmeübertragers sich auf einer ersten Seite des Wärmeübertragers zwischen dem Wärmeübertrager und einer ersten Seitenwand des Gehäuses befinden und der Anschlussraum sich proximal der ersten Seitenwand des Gehäuses befindet.

2. Heizkörper (100) nach Anspruch 1, wobei der Wasser-Rohrwendel-Wärmeübertrager (115) sich in einer oberen Region (111) des Gehäuses befindet.

3. Heizkörper (100) nach Anspruch 1 oder 2, der ein Flügelrad (140) aufweist, das dafür gestaltet ist, einen Luftstrom proximal zu dem Wärmeübertrager (115) zu lenken, um ein Aufheizen des Luftstroms vor dem Ablassen aus dem Heizkörper zu bewirken.

4. Heizkörper (100) nach Anspruch 3, der einen Elektromotor (180) zum Antreiben des Flügelrads aufweist.

5. Heizkörper (100) nach Anspruch 1, wobei das Vorlauf- (117) und das Rücklauf- (118) -rohr in dem Gehäuse (110) nach unten verlaufen, so dass die Installationsarmaturen (130A, 130B) in einer vertikalen Ausrichtung an sie angesetzt und mit ihnen gekoppelt sind.

6. Heizkörper (100) nach Anspruch 3, wobei das Flügelrad (140) längs durch das Gehäuse (110) verläuft und um eine Drehachse drehbar ist.

7. Heizkörper (100) nach Anspruch 6, wobei das Flügelrad (140) von einer unteren Wand (152) des Gehäuses (110) beabstandet ist, wobei der Rohrdurchgang (155) zwischen dem Flügelrad und der unteren Wand des Gehäuses bereitgestellt ist.

8. Heizkörper (100) nach einem der Ansprüche 6 bis 7, wobei das Flügelrad (140) mit einem Motor (180) gekoppelt ist, der auf einer zweiten Seite (121) des Gehäuses (11), die von der ersten Seite (120) verschieden ist, bereitgestellt ist.

9. Heizkörper (100) nach einem der vorhergehenden Ansprüche, der eine Lüftungsöffnung (190) aufweist, die sich in einer unteren Region (141) des Gehäuses (110) befindet, so dass durch die Lüftungsöffnung in das Gehäuse aufgenommene Luft funktionell durch Durchströmen des Wärmeübertragers (115) aufgeheizt wird und durch eine oder mehr in einer oberen Region (111) des Gehäuses bereitgestellte Lüftungsöffnungen austritt.

10. Heizkörper (100) nach Anspruch 9, wobei der Rohrdurchgang (155) zwischen der Lüftungsöffnung (190) und dem Flügelrad (140) bereitgestellt ist, so dass in das Gehäuse (110) aufgenommene Luft vor Kontakt mit dem Flügelrad an Rohrleitungen in dem Rohrdurchgang vorbeiströmt.

## Revendications

1. Appareil de chauffage d'espace (100) servant à des fins d'utilisation dans un système de chauffage domestique, l'appareil de chauffage d'espace comportant :
a. un carter (110) ;
b. un échangeur de chaleur à serpentins d'eau (115) comportant un tuyau d'écoulement (117) et un tuyau de retour (118) à des fins de raccordement respectif aux tuyaux d'écoulement et de retour du système de chauffage domestique, et
dans lequel le carter comporte des orifices d'entrée (150, 151) au niveau de premier (120) et deuxième (121) côtés du carter à des fins de réception de la tuyauterie de raccordement à des fins de raccordement entre les tuyaux d'écoulement et de retour de l'échangeur de chaleur et les tuyaux d'écoulement et de retour du système de chauffage domestique ; le carter comportant par ailleurs un passage pour tuyauterie (155) s'étendant depuis un côté du carter jusqu'à l'autre côté du carter pour permettre à la tuyauterie de raccordement de s'acheminer de manière interne à l'intérieur du carter depuis un côté jusqu'à l'autre côté du carter ;
dans lequel les tuyaux d'écoulement et de retour sont agencés pour être raccordés au système de chauffage domestique au moyen de raccords de plomberie (130A, 130B), et le carter définit par ailleurs un espace de connexion à l'intérieur d'un volume intérieur du carter qui suffit pour permettre la connexion des tuyaux d'écoulement et de retour par rapport aux raccords de plomberie nécessaires,
**caractérisé en ce que** les tuyaux d'écoulement et de retour de l'échangeur de chaleur sont situés au niveau d'un premier côté de l'échangeur de chaleur entre l'échangeur de chaleur et une première paroi latérale du carter et l'espace de connexion est situé de manière proximale par rapport à la première paroi latérale du carter.

2. Appareil de chauffage (100) selon la revendication 1, dans lequel l'échangeur de chaleur à serpentins d'eau (115) est situé dans une région supérieure (111) du carter.

3. Appareil de chauffage (100) selon la revendication 1 ou la revendication 2, comportant une roue (140) configurée pour diriger un courant d'air de manière proximale par rapport à l'échangeur de chaleur (115) pour effectuer un chauffage du courant d'air avant sa décharge en provenance de l'appareil de chauffage.

4. Appareil de chauffage (100) selon la revendication 3, comportant un moteur électrique (180) servant à alimenter la roue.

5. Appareil de chauffage (100) selon la revendication 1, dans lequel les tuyaux d'écoulement (117) et de retour (118) s'étendent vers le bas à l'intérieur du carter (110) de telle sorte que les raccords de plomberie (130A, 130B) sont présentés et raccordés sur ceux-ci selon une orientation verticale.

6. Appareil de chauffage (100) selon la revendication 3, dans lequel la roue (140) s'étend dans le sens longitudinal en travers du carter (110) et est rotative autour d'un axe de rotation.

7. Appareil de chauffage (100) selon la revendication 6, dans lequel la roue (140) est espacée par rapport à une paroi inférieure (152) du carter (110), le passage (155) pour tuyauterie étant mis en oeuvre entre la roue et la paroi inférieure du carter.

8. Appareil de chauffage (100) selon l'une quelconque des revendications 6 à 7, dans lequel la roue (140) est accouplée à un moteur (180) qui est mis en oeuvre au niveau d'un deuxième côté (121) du carter (11), différent du premier côté (120).

9. Appareil de chauffage (100) selon l'une quelconque des revendications précédentes, comportant un évent (190) situé dans une région inférieure (141) du carter (110) de telle sorte que, fonctionnellement, l'air reçu dans le carter au travers de l'évent sera chauffé en passant par l'échangeur de chaleur (115) et sortira au travers d'un ou de plusieurs évents mis en oeuvre dans une région supérieure (111) du carter.

10. Appareil de chauffage (100) selon la revendication 9, dans lequel le passage (155) pour tuyauterie est mis en oeuvre entre l'évent (190) et la roue (140) de telle sorte que l'air reçu à l'intérieur du carter (110) passe autour de la tuyauterie à l'intérieur du passage pour tuyauterie avant d'entrer en contact avec la roue.
